(19) Europäisches Patentamt
European Patent Office
Office européen des brevets

(11) Publication number: **0 406 010 A1**

(12) **EUROPEAN PATENT APPLICATION**

(21) Application number: **90307152.0**

(22) Date of filing: **29.06.90**

(51) Int. Cl.[5]: **C08L 67/02**, C08K 5/353, C08K 5/11, C08K 5/20, //(C08L67/02,23:08,23:06)

(30) Priority: **30.06.89 JP 168743/89**

(43) Date of publication of application:
**02.01.91 Bulletin 91/01**

(84) Designated Contracting States:
**AT BE CH DE DK ES FR GB GR IT LI LU NL SE**

(71) Applicant: **POLYPLASTICS CO. LTD.**
**3-13, Azuchicho, 2-chome**
**Chuo-Ku Osaka-shi Osaka(JP)**

(72) Inventor: **Mochizuki, Mitsuhiro**
**945-3 Tenma**
**Fuji-shi, Shizuoka(JP)**

(74) Representative: **Jackson, Peter et al**
**HYDE, HEIDE & O'DONNELL 10-12 Priests Bridgedge**
**London SW15 5JE(GB)**

(54) **Polyester resin composition.**

(57) A polyester resin composition includes a thermoplastic polyester base resin, between 1 to 40% by weight, based on the total composition weight, of a modified ethylene copolymer and between 0.01 to 10% by weight, based on the total composition weight of a bisoxazoline compound. The modified ethylene copolymer is the reaction product of (i) ethylene, (ii) an $\alpha$-olefin or an unsaturated carboxylic ester having at least 3 carbon atoms, and (iii) an unsaturated dicarboxylic acid or its derivative.

Fig. 1

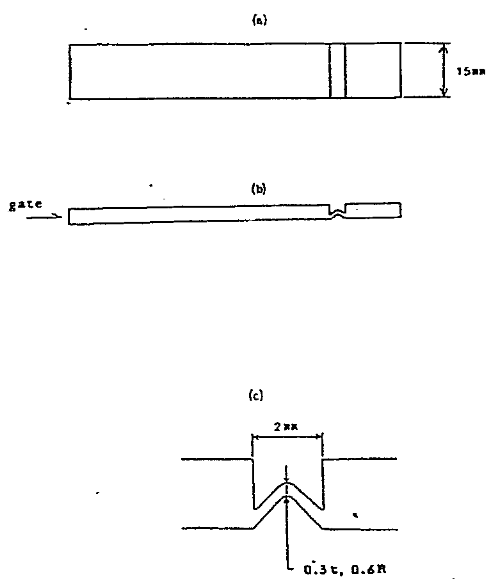


EP 0 406 010 A1

## POLYESTER RESIN COMPOSITION

The present invention generally relates to a polyester resin composition. More particularly, the present invention relates to a thermoplastic polyester resin composition having excellent tenacity at low temperatures and improved thermal resistance, particularly in terms of its durability at high temperatures.

Crystalline thermoplastic polyester resins having excellent mechanical, electrical, physical and chemical properties and workability, such as polyalkylene terephthalate resins, are conventionally used as engineering plastics in the production of automobile parts and electric or electronic components. However, improved and/or special properties for polyester resins must be developed as a result of new end-use applications being proposed. In this regard, it is important in some high temperature end-use applications for the resin to exhibit satisfactory thermal resistance. For example, the automotive industry requires that resins having excellent mechanical properties, particularly softness and tenacity (such as impact resistance), at low temperatures and these these "low temperature" properties be maintained, for safety reasons, even during use at high temperatures for prolonged periods of time.

A technique for satisfying these requirements has been proposed wherein a thermoplastic elastomer, such as a polycarbonate, olefinic polymer or rubbery polymer, is incorporated into the thermoplastic polyester resin in combination with an epoxy resin or polycarbodiimide. Although polyester resins containing an elastomer and additives do exhibit (to some extent) improved mechanical properties, the resins are problematic since surface peeling usually occurs due to poor compatibility of the components. Thus, the long-term thermal resistance of such conventional resins is insufficient.

Although thermoplastic polyester resin compositions can usually be molded relatively easily, the presence of an elastomer also tends to reduce the resin's mold release properties. Other problems (e.g., releasability, cracks and the like) occur when the resin is used to form moldings, films and tubes.

According to the present invention, however, polyester resin compositions are provided having excellent durability, particularly properties that are stable during use at high temperatures for prolonged time periods. These improvements have been made without impairing the otherwise excellent mechanical properties associated with polyester resins, particularly tenacity and moldability properties.

The present invention more specifically relates to a polyester resin composition basically comprising:

(A) between 50 and 98.99 % by weight of a thermoplastic polyester base resin,

(B) between 1 and 40% by weight of a modified ethylene copolymer comprising the following three components:

- (i) ethylene,
- (ii) an $\alpha$-olefin or an unsaturated carboxylic ester having at least 3 carbon atoms, and
- (iii) an unsaturated dicarboxylic acid or its derivative, and

(C) between 0.01 and 10% by weight of a bisoxazoline compound.

The present invention also provides a polyester resin composition which comprises, in addition to the above-described basic constituents, at least one compound (D) selected from the group consisting of olefinic polymers, fatty acid amide compounds and fatty acid exters of polyhydric alcohols to further improve the functional attributes of the composition.

Figures 1(a) and 1(b) are simplified plan and front views respectively, of a text piece used for evaluating the surface condition of moldings in the following Examples; and

Figure 1(c) is an enlarged view of the bend in the test piece of Figures 1(a) and 1(b).

The thermoplastic polyester resin component (A) preferably used in the present invention is a polyester produced by the polycondensation of a dicarboxylic acid compound with a dihdroxy compound, the polycondensation of an hydroxy carboxylic acid or the polycondensation of a mixture of these three components. The effect of the present invention can be obtained irrespective of whether the polyester is a homopolyester or a copolyester.

The dicarboxylic acid compounds used herein include known dicarboxylic acids such as terephthalic, isophthalic, naphthalenedicarboxylic, adipic and sebacic acids which may be substituted with an alkyl, alkoxy or halogen. These dicarboxylic acid compounds can be polymerized in the form of ester forming derivatives thereof, such as lower alcohol esters, e.g., dimethyl esters, thereof. They may be used either singly or in combination of two or more of the same.

The polyester-forming dihydroxy compounds used in the present invention include dihydroxy compounds such as ethylene glycol, propylene glycol, butanediol, neopentyl glycol, hydroquinone, resorcinol, dihydroxyphenyl, naphthalenediol, dihydroxydiphenyl ether, cyclohexanediol, 2,2-bis(4-hydroxyphenyl)-propane and diethoxidized bisphenol A and polyoxyalkylene glycols which may be substituted with an alkyl, alkoxy or halogen. They may be used either singly or in combination of two or more of the same.

Preferred hydroxy carboxylic acids include hydroxybenzoic, hydroxynaphthoic and diphenyleneoxycarboxylic acids which may be substituted with an alkyl, alkoxy or halogen. Ester forming derivatives of such hydroxy carboxylic acid may also be used. The hydroxy carboxylic acids may be used either alone or in combination of two or more of the same.

The polyesters may have a branched or cross-linked structures formed by using, in addition to those described above, a small amount of a trifunctional monomer such as trimellitic acid, trimesic acid, pyromellitic acid, pentaerythritol or trimethylolpropane.

Any thermoplastic polyester formed by the polycondensation of the above-described compounds as the monomer components can be used in the compositions of this invention as the component (A) either alone or in the form of a mixture of two or more of the same. Among them, polyalkylene terephthalate, particularly polybutylene terephthalate, and copolymers mainly comprising polybutylene terephthalate are preferably used.

The modified ethylene copolymer (B) used in the compositions of the present invention is obtained by polymerizing at least the following three components: (i) ethylene, (ii) an -olefin or an unsaturated carboxylic ester having at least 3 carbon atoms, and (iii) an unsaturated dicarboxylic acid or its derivative. The modified ethylene copolymers of component (B) used herein include random terpolymers, block copolymers, graft copolymers and mixtures of the same.

By using the copolymer comprising the above-described three components, surface peeling due to poor compatibility of the components (which is a typical defect of compositions containing a thermoplastic elastomer, such as a rubbery polymer, usually used as an impact strength modifier) can be overcome while the softness and tenacity properties such as impact resistance at low temperatures are significantly improved.

The α-olefin having at least 3 carbon atoms used in the coploymer includes propylene, butene-1, hexane-1 decene-1, 4-methylbutene-1 and 4-methylpentene-1. Among them, propylene and butene-1 are especially preferred.

Examples of preferred unsaturated carboxylic esters are alkyl esters of unsaturated carboxylic acids having 3 to 8 carbon atoms, such as alkyl acrylates and methacrylates. They include methyl acrylate, ethyl acrylate, n-propyl acrylate, isopropyl acrylate, n-butyl acrylate, isobutyl acrylate, methyl methacrylate, ethyl methacrylate, n-butyl methacrylate and isobutyl methacrylate. Among them, ethyl acrylate and methyl methacrylate are particularly preferred.

The unsaturated dicarboxylic acids or their derivatives include maleic acid, fumaric acid or their corresponding anhydrides and esters. Among them, maleic anhydride is particularly preferred.

The modified ethylene copolymer component (B) used herein preferably includes one produced by copolymerizing (based on the weight of the copolymer) (i) between 50 to 96.9% by weight of ethylene, (ii) between 3 to 40% by weight of an α-olefin or unsaturated carboxylic ester having at least 3 carbon atoms and (iii) between 0.01 to 10% by weight of an unsaturated dicarboxylic acid or its derivative. When the amount of the unsaturated dicarboxylic acid or its derivative is less than 0.1% by weight, the intended effect of the present invention cannot be obtained. On the other hand when the unsaturated dicarboxylic acid or its derivative is present in amounts that exceed 10% by weight, the appearance of the product becomes poor (due to yellowing) and its thermal stability is impaired.

The modified ethylene copolymer component (B) can be prepared by any conventional process. For example, a grafted polymer can be prepared by adding an unsaturated dicarboxylic acid or the like to a copolymer of ethylene and an α-olefin or unsaturated carboxylic ester so as to allow a reaction to occur at between 120 to 250° C, preferably in the presence of a radical initiator.

A terpolymer can be prepared by adding a radical initiator to a mixture of ethylene, an unsaturated carboxylic acid and the conducting polymerization under an elevated pressure of between about 100 and 200 MPa (1000 to 2000 atm).

Some of the modified ethylene copolymers that may be used as component (B) are commercially available from several sources. Examples of commercially available modified ethylene copolymers that may be used include Tafmer™ MP0620 and Tafmer™ MA8510 modified ethylene copolymers available from Mitsui Petrochemicals, Ltd., HPR AR201 and HPR AR205 modified ethylene copolymers available from Dupont-Mitsui Polychemicals Co., Ltd.; and Bondine™ modified ethylene copolymers available from Sumitomo Chemical Co., Ltd.

The object of the present invention can be attained by using any modified copolymer such as a terpolymer or a graft polymer. The modified copolymer is suitably selected depending on the properties that are required for given end-use applications. The modified ethylene copolymer Prepared by graft-polymerizing a copolymer of ethylene and an α-olefin or an unsaturated carboxylic ester with an unsaturated dicarboxylic acid, particularly maleic anhydride, is preferred from the viewpoint of the general qualities

of the resin, including its moldability, mechanical properties, impact properties (particularly at low temperatures) and thermal resistance.

The amount of the modified ethylene copolymer component (B) used in the present invention is between 1 to 40% by weight, preferably 3 to 30% by weight, based on the total weight of the composition. When the amount of the modified ethylene copolymer exceeds 40% by weight, the desirable intrinsic properties of the thermoplastic polyester resin are impaired which adversely affects the rigidity and thermal resistance of the resin composition. When the modified ethylene copolymer is present in amounts less than 1% by weight, inadequate improvements in the composition's impact resistance are obtained.

As described above, the compositions of the present invention are especially characterized in that they comprise a thermoplastic polyester base resin (A), a modified ethylene copolymer component (B) and a bisoxazoline compound component (C) in particular amounts. By employing the combination of these three components, excellent softness and tenacity, such as impact resistance at low temperatures, can be obtained. In addition, no peeling occurs during the molding step. The otherwise excellent initial properties can also be maintained during use at high temperatures for prolonged time periods.

The bisoxazoline compounds that may be used are those represented by the following general formula (1).

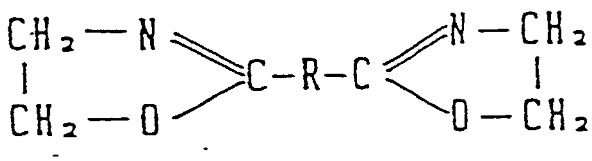

--- (1)

wherein R represents a divalent organic group and the hydrogen atoms may be replaced with an alkyl or aryl group.

Examples of the bisoxazoline compounds represented by the formula (1) include
2,2′-methylenebis(2-oxazoline),
2,2′-ethylenebis(2-oxazoline),
2,2′-ethylenebis(4-methyl-2-oxazoline),
2,2′-propylenebis(2-oxazoline),
2,2′-tetramethylene-bis(2-oxazoline),
2,2′-hexamethylenebis(2-oxazoline),
2,2′-octamethylenebis(2-oxazoline),
2,2′-p-phenylenebis(2-oxazoline),
2,2′-p-phenylenebis(4-methyl-2-oxazoline),
2,2′-p-phenylenebis(4,4-dimethyl-2-oxazoline),
2,2′-p-phenylenebis(4-phenyl-2-oxazoline),
2,2′-m-phenylenebis(2-oxazoline),
2,2′-m-phenylenebis(4,4-dimethyl-2-oxazoline),
2,2′-m-phenylenebis(4-phenyl-2-oxazoline),
2,2′-o-phenylenebis(2-oxazoline),
2,2′-phenylbis(4-methyl-2-oxazoline),
2,2′-bis(2-oxazoline),
2,2′-bis(4-methyl-2-oxazoline),
2,2′-bis(4-ethyl-2-oxazoline) and
2,2′-bis(4-phenyl-2-oxazoline).

The bisoxazoline compounds may be used either singly or in combination of two or more of them.

Preferred bisoxazoline compounds are those of the above general formula (1) wherein R represents an aromatic ring group, particularly a phenylene group. Particularly preferred are 2,2′-m-phenylenebis(2-oxazoline) and 2,2′-p-phenylenebis(2-oxazoline).

When the oxazoline compound is used in combination with the particular modified ethylene copolymer (B) of the present invention, the principal deleterious effect of the latter, i.e. reduction in durability at high temperatures is overcome while preserving the resin's otherwise excellent initial properties.

The amount of the bisoxazoline compound used is between 0.01 to 10% by weight, and preferably between 0.03 to 5% by weight, based on the total weight of the composition. Insufficient amounts of the bisoxazoline compound will not produce a beneficial effect. On the contrary, when the bisoxazoline is

present in excess, the viscosity of the composition and the amount of decomposition products increase. In addition, discoloration of the composition occurs during use for prolonged time periods.

The effects of the composition of the present invention can be further improved by adding at least one compound (D) selected from the group consisting of olefinic polymers, fatty acid amide compounds and fatty acid esters of polyhydric alcohols, though they are not indispensable. Particularly, the incorporation of the modified ethylene copolymer and bisoxazoline components according to the present invention overcomes typical defects, such as insufficient dispersion and poor releasability often observed. As a result, polyester compositions having improved moldability can be obtained.

The olefinic polymer used herein may be any homopolymer or copolymer mainly comprising an olefinic structural unit. The olefinic polymers include polyethylene, polypropylene, ethylene/propylene copolymer, ethylene/vinyl acetate copolymer and modifications thereof. It is preferred for the purpose of the present invention that the molecular weight of the olefinic polymer be low, for example, between 1,000 to 10,000. Particularly, a waxy olefinic polymer, which in and of itself exhibits poor moldability is preferred.

The fatty acid amide compounds usable as the component (D) are preferably amides abtained from a higher fatty acid having a straight chain having at least 10 carbon atoms and an aliphatic amine, such as stearamide, ethylenebisstearamide, methylenebisstearamide, methylenebislauramide, palmitamide and oleamide. Among them, ethylenebisstearamide, methylenebisstearamide and methylenebislauramide are particularly preferred.

The fatty acid amide compounds usable as the component (D) are preferably amides obtained from a higher fatty acid having a straight chain having at least 10 carbon atoms and an aliphatic amine, such as stearamide, ethylenebisstearamide, methylenebisstearamide, methylenebislauramide, palmitamide and oleamide. Among them, ethylenebisstearamide, methylenebisstearamide and methylenebislauramide are particularly preferred.

The fatty acid esters of polyhydric alcohols (D) are esters of a polyhydric alcohol such as glycerol, diglycerol, pentaerythritol, sorbitan or ethylene glycol with a fatty acid such as lauric, palmitic, stearic, behenic or montanic acid, preferably those of polyhydric alcohol such as glycerol or pentaerythritol with a fatty acid having 12 or more carbon atoms. Particularly preferred fatty acid esters include glycerol monostearate, glycerol monobehenate, pentaerythritol monostearate and pentaerythritol tetrastearate.

The amount of the compound (D) is preferably between 0.5 and 5% by weight, and more preferably 0.1 to 3% by weight, based on the total composition weight. When component (D) is present in amounts greater than 5% by weight, the mechanical properties of the compositions are unfavorably affected.

The resin compositions of the present invention can be used in combination with a small amount of other auxiliary thermoplastic resins provided that the beneficial effects of the present invention are not inhibited. The auxiliary thermoplastic resins that may be used herein include any resin that is stable at high temperatures and include, for example, polyamides, ABS, polyphenylene oxides, polyalkyl acrylates, polyacetals, polysulfones, polyether sulfones, polyether imides, polyether ketones and fluororesins. These thermoplastic resins may be used either alone or in the form of a mixture of two or more of the same.

The compositions of the present invention may also contain known substances usually added to thermoplastic and thermosetting resins, such as stabilizers, e.g., antioxidants, thermal stabilizers and ultraviolet absorbers; antistatic agents, flame retardants; flame retarding assistants; colorants, e.g., dyes and pigments; lubricants; plasticizers; crystallization promoters and nucleating agents; and inroganic fillers in order to obtain a composition having desired properties suitable for the intended end-use application.

Particularly, high flame retardancy is typically required of electric appliances and automobiles due to the environmental conditions of use. Thus, the incorporation of flame retardants and flame-retarding assistants is often indispensable.

The flame retardants usable herein include known halogen compounds usable herein include known halogen compounds such as brominated polycarbonates, brominated epoxy compounds, brominated diphenyl and brominated diphenyl ether.

The flame-retarding assistants usable herein include antimony compounds, such as antimony trioxide and antimony halides, metal compounds containing zinc or bismuth, magnesium hydroxide and clayey silicates such as asbestos.

Preferred inorganic fillers include ordinary inorganic fibers such as glass fiber, carbon fiber, ceramic fiber, boron fiber, potassium titanate fiber and asbestos; powdery or grnaulr substance such as calcium carbonate, high-dispersion silicates, alumina, aluminium hydroxide, talc, clay, mica, glass flakes, glass powder, glass beads, quartz powder, siliceous sand, wollastonite, carbon black, barium sulphate, plaster of Paris, silicon carbide, alumina, boron nitride and silicon nitride; platy inorganic compounds; and whiskers. These inorganic fillers may be used alone or, if necessary, in the form of a mixture of two or more of the same.

The compositions of the present invention can be easily produced by ordinary processing techniques using apparatus ordinarily employed in the production of resin compositions. For example, the components may be mixed together and then kneaded and extruded with an extruder to form pellets with the pellets thereinafter being molded. Also, pellets having different compositions may be prepared separately, with the required amounts being mixed together. The pellet mixture may then be molded to obtain moldings having the intended compositions. Finally, one or more components may be fed directly to a molding machine. In order to obtain a homogeneous composition, it is preferred that a part of the resin components be finely pulverized and mixed with other components.

Further improvements to the properties of the composition may be obtained by heating the resin mixture or molding the same at a temperature not higher than the melting point thereof in the presence of an inert gas and/or under reduced pressure for one hour or more (i.e., so-called solid phase polymerization).

The present invention provides resin compositions having excellent tenacity at low temperatures and remarkably improved thermal stability, particularly durability, at high temperatures which are superior to those of ordinary polyester resin compositions containing an impact strength improver. At the same time, the normally attractive mechanical and moldability properties are maintained.

As described above, the compositions of the present invention have excellent processability and reduced tenacity since they exhibit just slight thermal hysteresis. Therefore, the compositions of this invention are suitable for use as a mechanical material or a material for parts of automobiles and electric appliances which are typically used at high temperatures for long periods of time. Specific exemplary parts include connectors, coil bobbins, switches and relays.

## EXAMPLES

The following non-limiting Examples will further illustrate the present invention.

In the following Examples, the properties of the compositions were determined by the following methods.

### (1) Tensile-Elongation

The initial elongation and the elongation after heating at 120 °C for 500 hours were determined according to ASTM D-638 (test piece: ASTM type IV having a thickness of 1mm; determination temperatures: 23 °C and 0 °C).

### (2) Izod impact strength:

The notched Izod impact strength was determinded according to ASTM D-256.

### (3) Surface conditions of moldings:

Test pieces configured in the manner shown in Fig.1 were prepared and the extent of surface peeling (particularly at a thin part of the molding) was determined visually. The results were classified into the following three groups:

O : Substantially no peeling was observed
Δ : Some peeling was observed, and
X : Peeling was serious

### (4) Moldability:

Boxes (15mm W x 40mm L x 30mm H x 1mm T) were produced under molding conditions whereby the cylinder temperature was 250 °C and the mold temperature was 60 °C. The trace of the ejector pin was then examined visually with the results being evaluated according to the following four ranks:

```
1 ------------ 2 ------------ 3 ------------- 4
(good)         trace of injector pin          (bad)

none ---- blister in ejector pin part ---- serious
(slight)
```

Examples 1 to 13 and Comparative Examples 1 to 10

A modified ethylene copolymer (B), bisoxazoline compound (C) and, if necessary, component (D) were added to polybutylene terephthalate (A) in amounts specified in Table 1. The components were mixed together and extruded to form pellets with an extruder. The pellets were injection-molded to form test pieces and the properties of the same were examined to obtain the results shown in Table 1.

For comparison, the same procedure as that described above was repeated that the component (B) or (C) was omitted, or an ethylene/ethyl acrylate copolymer (which is outside the scope of the present invention) was used. The results are also shown in Table 1.

Examples 14 and 15 and Comparative Examples 11 and 12

The same procedure as that of Example 10 was repeated except that a mixture of polybutylene terephthalate and polyethylene terephthalate was used as the component (A). The results are shown in Table 1.

In the Comparative Examples 11 and 12, the same procedure as that described above was repeated except that the oxazoline compound (C) was omitted. The results are also shown in Table 1.

Table 1

| | | | unit | Example 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|
| Composition | (A) polybutylene terephthalate | | wt.% | 94.8 | 93.8 | 88.8 | 89.5 | 88.7 | 86.7 | 79.8 | 78.8 | 89.5 | 89.5 | 89.5 | 79.5 | 89.5 | 67.1 | 35.8 |
| | (A) polyethylene terephthalate | | " | | | | | | | | | | | | | | 22.4 | 53.7 |
| | (B) modified ethylene copolymer*1 | B-1 | " | 5 | 5 | 10 | 10 | 10 | 10 | 20 | 20 | 10 | | | | | | |
| | | B-2 | " | | | | | | | | | | 10 | 10 | 20 | | 10 | 10 |
| | | B-3 | " | | | | | | | | | | | | | 10 | | |
| | (B)' ethylene/ethyl acrylate copolymer | | " | | | | | | | | | | | | | | | |
| | (C) bisoxazoline compound*2 | mPBO | " | 0.2 | 0.2 | 0.2 | 0.2 | 1.0 | 3.0 | 0.2 | 0.2 | | 0.2 | | 0.2 | 0.2 | 0.2 | 0.2 |
| | | pPBO | " | | | | | | | | | 0.2 | | 0.2 | | | | |
| | (D) olefinic polymer*3 | | " | | 1.0 | 1.0 | | | | | 1.0 | | | | | | | |
| | (D) fatty acid ester*4 | | " | | | | 0.3 | 0.3 | 0.3 | | | 0.3 | 0.3 | 0.3 | 0.3 | 0.3 | 0.3 | 0.3 |
| Properties | surface condition of molding | | - | o | o | o | o | o | o | o | o | o | o | o | o | o | o | o |
| | notched Izod impact strength | | kg.cm/cm | 4.7 | 4.7 | 11.5 | 11.7 | 13.5 | 14.8 | 26.0 | 25.7 | 11.5 | 10.8 | 10.9 | 24.8 | 9.1 | 11.5 | 11.0 |
| | tensile elongation | initial (determined at 0°C) | % | 95 | 105 | 119 | 130 | 140 | 160 | 186 | 205 | 138 | 135 | 125 | 175 | 105 | 135 | 115 |
| | | initial (determined at 23°C) | % | 180 | 190 | 220 | 230 | 245 | 270 | 285 | 293 | 230 | 238 | 232 | 283 | 215 | 260 | 240 |
| | | after heating at 120°C for 500 h (determined at 23°C) | % | 104 | 114 | 145 | 154 | 100 | 210 | 205 | 220 | 143 | 150 | 138 | 205 | 128 | 164 | 139 |
| | moldability | | - | 3 | 1 | 2 | 1 | 1 | 1 | 4 | 2 | 1 | 1 | 1 | 2 | 1 | 1 | 2 |

*1 B-1: ethylene/butene-1 copolymer graft-copolymerized with maleic anhydride
B-2: ethylene/ethyl acrylate copolymer graft-copolymerized with maleic anhydride
B-3: terpolymer comprising ethylene, ethyl acrylate and maleic anhydride

*2 mPBO: 1,3-phenylenebis(2-oxazoline)
pPBO: 1,4-phenylenebis(2-oxazoline)

*3 Low-molecular polyethylene

*4 Pentaerythritol tetrastearate

Table 1 (contd.)

| | | | unit | Comparative Example 1 | 2 | 3 | 4 | 5 | 6 | 7 | 8 | 9 | 10 | 11 | 12 |
|---|---|---|---|---|---|---|---|---|---|---|---|---|---|---|---|
| Composition | (A) polybutylene terephthalate | | wt.% | 99.8 | 95 | 90 | 89 | 89.7 | 89.5 | 80 | 89.7 | 79.7 | 89.7 | 67.3 | 35.9 |
| | (A) polyethylene terephthalate | | " | | | | | | | | | | | 22.4 | 53.8 |
| | (B) modified ethylene copolymer*1 | B-1 | " | | 5 | 10 | 10 | 10 | | 20 | | | | | |
| | | B-2 | " | | | | | | | | 10 | 20 | | 10 | 10 |
| | | B-3 | " | | | | | | | | | | 10 | | |
| | (B)' ethylene/ethyl acrylate copolymer | | " | | | | | | 10 | | | | | | |
| | (C) bisoxazoline compound *2 | mPBO | " | 0.2 | | | | | 0.2 | | | | | | |
| | | pPBO | | | | | | | | | | | | | |
| | (D) olefinic polymer*3 | | " | | | | 1.0 | | | | | | | | |
| | (D) fatty acid ester*4 | | " | | | | | 0.3 | 0.3 | | 0.3 | 0.3 | 0.3 | 0.3 | 0.3 |
| Properties | surface condition of molding | | - | O | O | O | O | O | X | Δ | O | Δ | Δ | O | O |
| | notched Izod impact strength | | kg.cm/cm | 3.0 | 4.5 | 11.8 | 11.1 | 11.5 | 7.7 | 25.1 | 10.3 | 23.0 | 8.5 | 11.2 | 10.8 |
| | tensile elongation | initial (determined at 0°C) | % | 65 | 93 | 115 | 111 | 118 | 81 | 150 | 113 | 142 | 98 | 120 | 114 |
| | | initial (determined at 23°C) | % | 165 | 105 | 225 | 230 | 238 | 205 | 270 | 235 | 275 | 210 | 250 | 245 |
| | | after heating at 120°C for 500 h (determined at 23°C) | % | 35 | 20 | 33 | 32 | 38 | 85 | 45 | 37 | 47 | 30 | 30 | 25 |
| | moldability | | - | 2 | 3 | 4 | 2 | 1 | 1 | 4 | 1 | 2 | 1 | 2 | 2 |

While the invention has been described in connection with what is presently considered to be the most practical and preferred emobiment, it is to be understood that the invention is not to be limited to the disclosed embodiment, but on the contrary, is intended to cover various modifications and equivalent arrangements included within the spirit and scope of the appended claims.

## Claims

1. A polyester resin composition comprising:
(A) a thermoplastic polyester base resin,
(B) between 1 and 40% by weight, based on the total composition weight, of a modified ethylene copolymer comprising the reaction product of:
(i) ethylene,
(ii) an α-olefin or an unsaturated carboxylic ester having at least 3 carbon atoms, and
(iii) an unsaturated dicarboxylic acid or its derivative, and
(C) between 0.01 and 10% by weight, based on the total composition weight, of a bisoxazoline compound.

2. A polyester resin composition according to claim 1, wherein the modified ethylene copolymer (B) is the graft-copolymerizing reaction product of a copolymer of ethylene and an α-olefin having at least 3 carbon atoms with an unsaturated dicarboxylic acid or a derivative thereof.

3. A polyester resin composition according to claim 1, wherein the modified ethylene copolymer (B) is the graft-copolymerization product of an ethylene/unsaturated dicarboxylic acid or a derivative thereof.

4. A polyester resin composition according to claim 2 or claim 3, wherein the dicarboxylic acid or derivative thereof is maleic anhydride.

5. A polyester resin composition according to any preceding claim, wherein the thermoplastic polyester resin (A) is a resin consisting mainly of polybutylene terephthalate.

6. A polyester resin composition according to any preceding claim, and further comprising:
(D) between 0.05 and 5% by weight, based on the total composition weight, of at least one compound selected from the group consisting of olefinic polymers, fatty acid amide compounds, and fatty acid esters of polyhydric alcohyols.

7. A polyester resin composition according to claim 6, wherein the compound (D) is a low-molecular weight polyethylene.

8. A polyester resin composition according to claim 6, wherein the compound (D) is an ester of a polyhydric alcohol selected from glycerol and pentaerythritol with a fatty acid having at least 12 carbon atoms.

9. A polyester resin composition according to any preceding claim, wherein said bisoxazoline compound is represented by the formula:

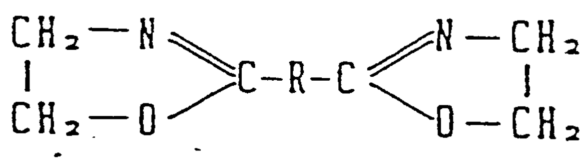

wherein R is a divalent organic group, and wherein the improved atoms may be substituted by alkyl or aryl groups.

10. A molded article consisting of a polyester resin composition according to any preceding claim.

Fig. 1

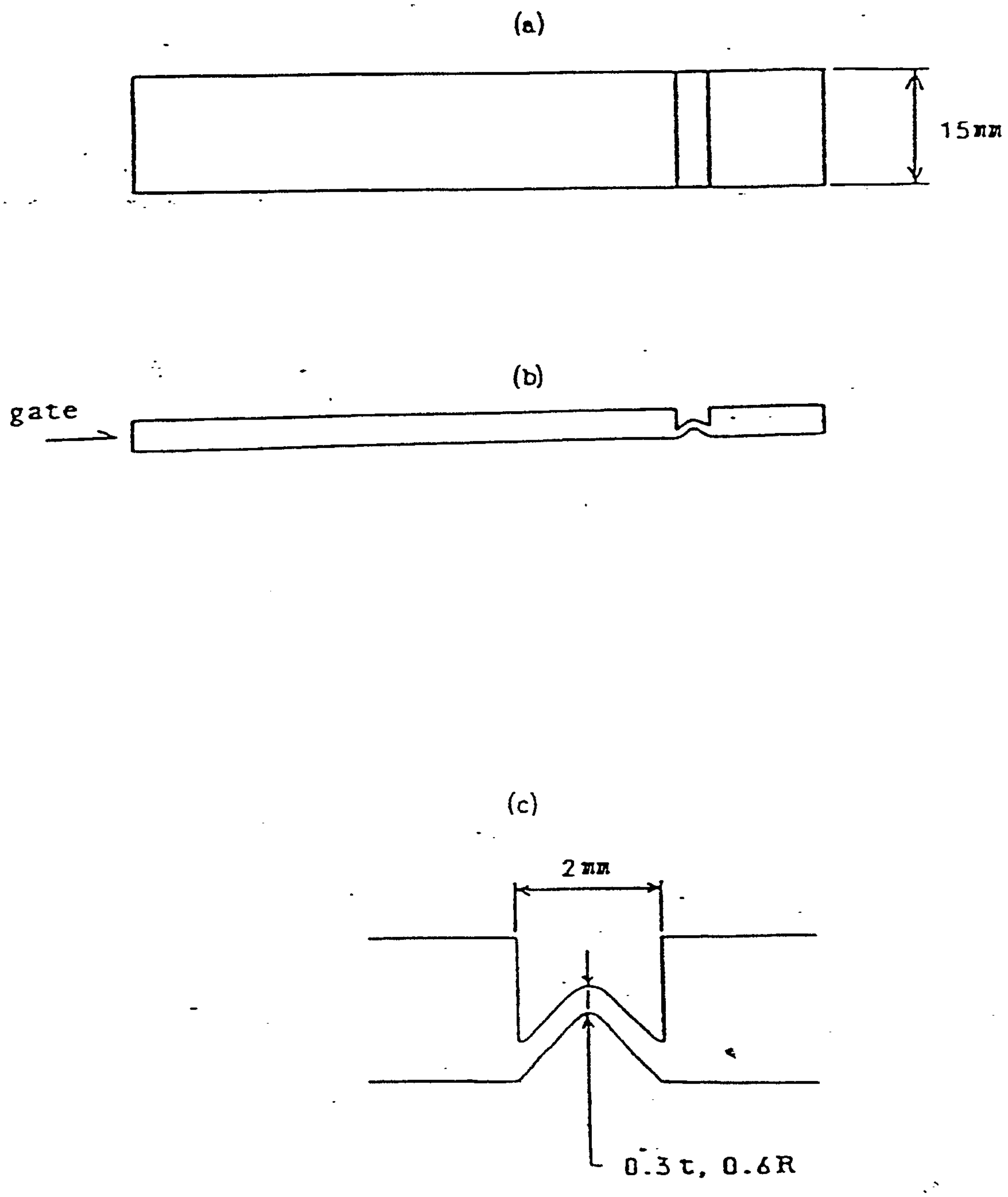

European Patent Office

# EUROPEAN SEARCH REPORT

Application number

EP 90307152.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US - A - 4 806 588 (FUJIMOTO et al.) * Claims; column 1, lines 5-15; column 2, line 41 - column 3, line 5 * | 1-5,9, 10 | C 08 L 67/02<br>C 08 K 5/353<br>C 08 K 5/11<br>C 08 K 5/20<br>//(C 08 L 67/02<br>C 08 L 23:08<br>C 08 L 23:06) |
| Y | EP - A2 - 0 295 706 (NIPPON PETROCHEMICALS CO., LTD.) * Claims; page 1, lines 9-12; page 3, line 55; page 4, lines 2,35; page 8, line 57 - page 9, line 3 * | 1-6,10 | |
| A | GB - A - 2 098 231 (DYNAMIT NOBEL AG) * Claims * | 1,5,9, 10 | |
| A | GB - A - 2 121 060 (MITSUBISHI CHEMICAL INDUSTRIES LTD.) * Claims * | 1-3,5, 10 | TECHNICAL FIELDS SEARCHED (Int. Cl.5) |
| A | EP - A1 - 0 074 337 (CIBA-GEIGY AG) * Claims * | 1,9 | C 08 L 67/00<br>C 08 L 23/00<br>C 08 K |

The present search report has been drawn up for all claims

| Place of search | Date of completion of the search | Examiner |
|---|---|---|
| VIENNA | 08-10-1990 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document